Europäisches Patentamt

European Patent Office

Office européen des brevets

(11) Veröffentlichungsnummer: **0 612 010 A2**

(12) **EUROPÄISCHE PATENTANMELDUNG**

(21) Anmeldenummer: **94102248.5**

(22) Anmeldetag: **14.02.94**

(51) Int. Cl.⁵: **G06F 7/60**, G06F 9/455

(30) Priorität: **17.02.93 DE 4304859**

(43) Veröffentlichungstag der Anmeldung:
**24.08.94 Patentblatt 94/34**

(84) Benannte Vertragsstaaten:
**DE FR GB IT**

(71) Anmelder: **SIEMENS AKTIENGESELLSCHAFT**
**Wittelsbacherplatz 2**
**D-80333 München (DE)**

(72) Erfinder: **Klimke, Martin**
**Bayrischzeller Strasse 23**
**D-81539 München (DE)**

(54) Anordnung zur Emulation eines Fuzzy-Logic-Koprozessors und Verfahren zu deren Betrieb.

㊤ Die Erfindung betrifft eine Anordnung, bei der von einer Protokoll-Recheneinheit (PMC), die mit einem Rechner (PC) über eine Schnittstelle (PCS) verbunden ist, Daten in einen Wissensbasis-Speicher (KBM) in Form eines Dual-Ported-RAMs schreibbar und aus diesem vom Fuzzy-Logic-Koprozessor (FLC) lesbar sind und bei der ein Teil der vom Fuzzy-Logic-Koprozessor erzeugten Signale (AFLC) eines Adreßbusses in einem FIFO-Speicher (FIFO) durch eine Synchronisationsschaltung (SYNC) synchronisiert einschreibbar und von der Protokoll-Recheneinheit auslesbar sind. Ferner betrifft die Erfindung ein Verfahren, bei dem eine schritthaltende Fehlersuche (on-line-debugging) möglich ist, ohne daß dabei eine Wirts-Recheneinheit (MC) des Fuzzy-Logic-Koprozessors hiermit belastet wird und dadurch ein Fuzzy-Regler bei der Emulation ein anderes Zeitverhalten aufweist als im Normalbetrieb.

FIG 1

EP 0 612 010 A2

Für die Entwicklung von Reglern mit einem Fuzzy-Logic-Koprozessor ist es notwendig, eine Entwicklungsumgebung zur Verfügung zu stellen, mit der der Anwender die Abläufe und Reaktionen eines Fuzzy-Reglers im Gesamtsystem beobachten kann und mit der es möglich ist interaktiv Regeln und Zugehörigkeitsfunktionen des Fuzzy-Logic-Koprozessors zu verändern.

Der Erfindung liegt die Aufgabe zugrunde, eine Anordnung und ein Verfahren zu deren Betrieb anzugeben, bei der bzw. bei dem eine Wirts-Recheneinheit des Fuzzy-Logic-Koprozessors durch die Emulation nicht zusätzlich belastet wird und bei der die Emulation das Gesamtsystem infolgedessen kein anderes Zeitverhalten aufweist als im Normalbetrieb.

Die Aufgabe wird im Falle der Anordnung erfindungsgemäß durch die im Patentanspruch 1 angegebenen Merkmale und im Falle des Verfahrens zu deren Betrieb erfindungsgemäß durch die Merkmale des Anspruchs 8 gelöst.

Die Ansprüche 2 bis 7 sind auf bevorzugte Ausbildungen der erfindungsgemäßen Anordnung gerichtet und beziehen sich auf eine Anordnung der Wirts-Recheneinheit und des Fuzzy-Logic-Koprozessors auf einem gemeinsamen Halbleiterchip und auf eine spezielle Ausgestaltung einer Synchronisationsschaltung, eines Wissensbasisspeichers und einer Benutzerschnittstelle eines Rechners.

Die Ansprüche 9 und 10 sind auf vorteilhafte Weiterbildungen des erfindungsgemäßen Verfahrens gerichtet und betreffen die Speicherung und Verarbeitung von Datensätzen in Abhängigkeit von Trigger- und Trace-Bedingungen.

Der mit der Erfindung erzielbare Vorteil liegt insbesondere darin, daß bei der Emulation eine schritthaltende Fehlersuche (on-line-debugging) des Fuzzy-Logic-Koprozessors völlig transparent für die Wirts-Recheneinheit stattfindet, die Wirts-Recheneinheit also gar nicht "bemerkt", ob sie den Regler mit Entwicklungsumgebung benutzt oder nicht, daß das Programm der Wirts-Recheneinheit keinerlei Debugging-Hilfsprogramme für den Regler beinhalten muß und daß eine wesentliche Quelle schwer zu ermittelnder Fehler beim Übergang vom Entwicklungsprogramm zum Serienprogramm damit völlig ausgeschaltet ist.

Ein weiterer Vorteil der Erfindung liegt insbesondere darin, daß die Anordnung bzw. das Verfahren zu deren Betrieb auch für den Fall möglich ist, daß die Wirts-Recheneinheit und der Fuzzy-Logic-Koprozessor auf einem gemeinsamen Halbleiterchip integriert sind und eine Schnittstelle zwischen beiden nicht extern verfügbar ist.

Die Erfindung wird nachfolgend anhand der Zeichnung erläutert.

Dabei zeigt

Figur 1    ein Blockschaltbild der erfindungsgemäßen Anordnung,

Figur 2    ein Detailschaltbild der Synchronisationsschaltung in Figur 1,

Figur 3    ein Zeitdiagramm zur Erläuterung des erfindungsgemäßen Verfahrens im Falle von vier Eingangsvariablen und

Figur 4    ein Zeitdiagramm zur Erläuterung des erfindungsgemäßen Verfahrens im Falle von sechs Eingangsvariablen.

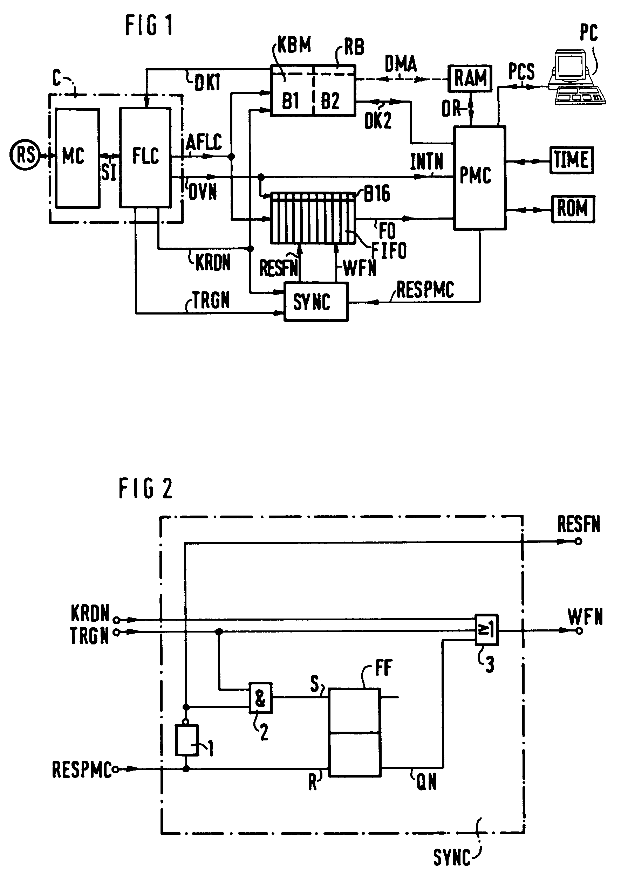

In Figur 1 ist ein Blockschaltbild einer erfindungsgemäßen Anordnung zur Emulation eines Fuzzy-Logic-Koprozessors dargestellt, die neben einem Fuzzy-Logic-Controller FLC mit zugehöriger Wirts-Recheneinheit MC, die ihrerseits mit einer Regelstrecke RS verbunden ist, einen Wissensbassisspeicher KBM, einen FIFO-Speicher FIFO, eine Synchronisationsschaltung SYNC und eine Protokoll-Recheneinheit PMC besitzt, wobei die Protokoll-Recheneinheit mit einem Zeitgeber (Hardwaretimer) TIME, einem Lesespeicher ROM und einem Schreib/Lese-Speicher RAM verbunden ist, und über eine Schnittstelle PCS durch einen Rechner PC, der eine Benutzerschnittstelle zur Bedienung der Anordnung zur Verfügung stellt, ansteuerbar ist.

Eine nähere Beschreibung eines geeigneten Fuzzy-Logic-Koprozessors FLC ist beispielsweise aus der deutschen Patentanmeldung mit dem amtlichen Aktenzeichen P 42 25 758.1 und dem Titel "Schaltungsanordnung mit einer Wirts-Recheneinheit, einem Fuzzy-Logic-Koprozessor und einem Wissensbasis-Speicher" entnehmbar. Als Wirts-Recheneinheit (Host CPU) kann beispielsweise der Rechner SIECO 51 der Firma Siemens Verwendung finden. Der Fuzzy-Logic-Koprozessor FLC kann dabei getrennt vom Wirts-Rechner aufgebaut sein, wobei die beiden voneinander getrennten Bausteine über eine extern verfügbare Schnittstelle SI verbunden sind. In Figur 1 ist ferner durch eine Strichpunktlinie die Möglichkeit angedeutet, daß sich der Fuzzy-Logic-Koprozessor FLC zusammen mit der Wirts-Recheneinheit MC auf einem gemeinsamen Halbleiterchip C befinden können und hierbei eine Schnittstelle zwischen Fuzzy-Logic-Koprozessor und Wirts-Recheneinheit extern nicht verfügbar ist.

Der Wissensbasis-Speicher KBM ist in Form eines Dual-Ported-RAMs, vorzugsweise in Form eines Dual-Ported-SRAMs, ausgeführt und kann vom Fuzzy-Logic-Koprozessor FLC gelesen werden. Der Lesevorgang erfolgt vereinfacht dargestellt so, daß der Fuzzy-Logic-Koprozessor Signale AFLC eines Adreßbusses und ein Lesesignal KRDN an den Wissensbasis-Speicher KBM liefert und dieser die entsprechenden Daten DK1 aus den adressierten Speicherzellen zur Verfügung stellt. Durch einen direkten Speicherzugriff DMA sind Daten aus dem Schreib/Lese-Speicher RAM in sehr kurzer Zeit in den Wissensbasis-Speicher KBM übertragbar. Ferner sind Daten DK2 von der Protokoll-Recheneinheit PMC kommend in den Wissensspeicher einlesbar und optional, gestrichelt angedeutet, zu Testzwecken durch die Protokoll-Recheneinheit PMC aus dem Wissensbasis-Speicher KBM auslesbar. Der Wissensbasis-Speicher KBM besteht entweder aus einem Block, wobei die Daten DK2 nur in einen reservierten Bereich RB geschrieben und die Daten DK1 nur aus dem restlichen Wissensbasis-Speicher gelesen werden, oder zwei Blöcken B1 und B2 die getrennt gelesen und beschrieben werden.

Die Protokoll-Recheneinheit PMC besitzt einen Eingang für ein Interruptsignal INTN, der vom Fuzzy-Logic-Koprozessor FLC ein Signal OVN zur Bestätigung gültiger Ausgangsdaten erhält, und arbeitet nach einem im Lese-Speicher ROM abgelegten Programm. Das Programm umfaßt im wesentlichen ein Fehlerrückverfolgungsprogramm (Trigger/Trace-Programm) und ein Protokoll-Handhabungsprogramm (protokoll handler) für die Kommunikation mit dem Rechner PC. Ferner ist die Zeitgeberschaltung TIME von der Protokoll-Recheneinheit ansteuerbar und lesbar, ein Signal FO am Ausgang des FIFO-Speichers FIFO durch die Protokoll-Recheneinheit PMC lesbar und der FIFO-Speicher durch ein Rücksetzsignal RESPMC der Protokoll-Recheneinheit rücksetzbar. Weiter sind durch die Protokoll-Recheneinheit PMC Daten DR in den Schreib/Lese-Speicher RAM einschreibbar und aus diesem Daten in die Protokoll-Recheneinheit PMC lesbar. Der Schreib/Lese-Speicher dient im wesentlichen zur Speicherung von Zwischenergebnissen und zur Realisierung eines sogenannten Trace-Puffers, in dem scharfe Eingangs- und Ausgangswerte zusammen mit den jeweiligen Zeitwerten aus der Zeitgeberschaltung TEMP abgelegt sind. Das Fehlerrückverfolgungsprogramm muß durch die Protokoll-Recheneinheit PMC in der Zeit abarbeitbar sein, die sich aus der Summe der Verarbeitungszeit des Fuzzy-Logic-Koprozessors FLC und den Zeiten für die Schreib- und Lesezugriffe der Wirts-Recheneinheit auf den Fuzzy-Logic-Koprozessor ergibt. Die Protokoll-Recheneinheit PMC muß so geartet sein, daß Interrupt getrieben ein direkter Speicherzugriff DMA möglich ist. Als Protokoll-Recheneinheit kann beispielsweise ein Mikro-Controller wie der Mikro-Controller 80 C 166 Verwendung finden.

Die Schnittstelle PCS zwischen der Protokoll-Recheneinheit PMC und dem Rechner PC kann beispielsweise aus einer asynchronen seriellen Schnittstelle bestehen.

Durch den Rechner PC wird eine Benutzerschnittstelle zur Bedienung der erfindungsgemäßen Anordnung zur Verfügung gestellt, durch die die Emulation gestartet werden kann und sowohl die Werte für die Eingangs- und Ausgangszugehörigkeitsfunktionen als auch die Regeln änderbar sind. Ferner ist es von Vorteil, wenn durch die Benutzerschnittstelle zumindest die scharfen Eingangs- und Ausgangswerte in ihrem zeitlichen Verlauf vorzugsweise graphisch dargestellt werden. Zusätzlich können beispielsweise auch die Zugehörigkeitsfunktionen und Regeln graphisch dargestellt werden.

In den FIFO-Speicher (first in first out memory) ist abhängig von einem im Fuzzy-Logic-Koprozessor FLC erzeugten Auslöse-Signal TRGN ein Teil der im Fuzzy-Logic-Koprozessor erzeugten Signale AFLC des Adreßbusses zusammen mit einem Markierungsbit B16 einschreibbar. In das Markierungsbit B16 wird das Signal OVN zur Bestätigung gültiger Ausgangsdaten eingeschrieben. Als FIFO-Speicher können beispielsweise zwei handelsübliche FIFO-Speicher mit jeweils 256 * 9 Bit dienen. Ein Rücksetzsignal RESFN für den FIFO-Speicher und ein synchronisiertes Schreibsignal WFN für den FIFO-Speicher sind in der Synchronisationsschaltung SYNC aus dem Lesesignal KRDN und dem Auslöse-Signal TRGN des Fuzzy-Logic-Koprozessors und aus dem Rücksetzsignal RESTMC der Protokoll-Recheneinheit PMC bildbar.

In Figur 2 ist eine mögliche Schaltung der erfindungsgemäßen Synchronisationsschaltung SYNC gezeigt, die aus einem RS-Flip-Flop FF, einem Inverter 1, einer UND-Verknüpfung 2 und einer ODER-Verknüpfung 3 besteht. Beim Lesesignal KRDN, Triggersignal TRGN, FIFO-Rücksetzsignal RESFN und FIFO-Schreibsignal WFN handelt es sich jeweils um sogenannte Low-Activ-Signale und beim Rücksetzsignal RESPMC um ein normales High-Active-Signal. Aus dem Rücksetzsignal RESPMC ist mit Hilfe des Inverters 1 in der Synchronisationsschaltung SYNC das FIFO-Rücksetzsignal RESFN direkt durch Invertieren bildbar. Ferner ist das Rucksetzsignal RESPMC einem Rücksetzeingang R des RS-Flip-Flops FF zuführbar, dessen negierter Ausgang QN mit einem Eingang der ODER-Schaltung 3 verbunden ist. Das FIFO-Rücksetzsignal RESFN ist in der UND-Verknüpfung 2 mit dem Auslöse-Signal TRGN zu einem Signal für einen Setzeingangs des RS-Flip-Flops verknüpfbar. Ein zweiter Eingang der ODER-Verknüpfung 3 ist mit dem Auslöse-Signal TRGN und ein dritter Eingang der ODER-Verknüpfung 3 ist mit dem Lesesignal KRDN versorgbar und der Ausgang der ODER-Verknüpfung 3 führt das FIFO-Schreibsignal WFN.

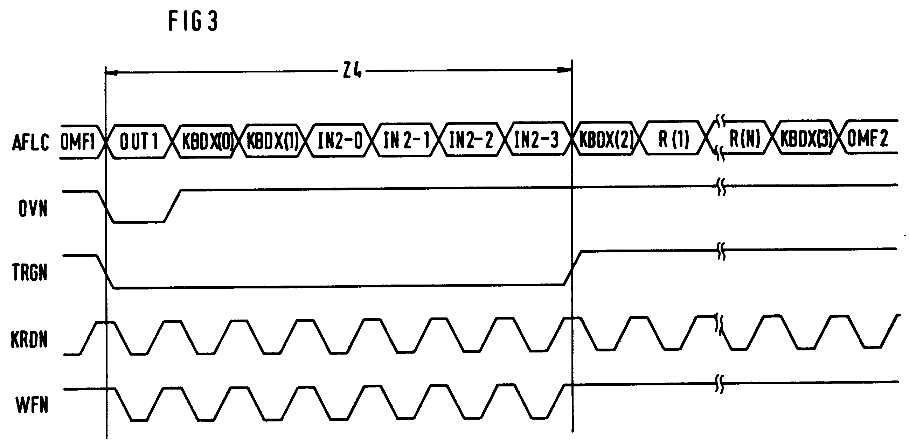

Zur Erläuterung des erfindungsgemäßen Verfahrens ist in Figur 3 ein Zeitdiagramm dargestellt, das die vom Fuzzy-Logic-Koprozessor erzeugten Signale AFLC des Adreßbusses, das Signal OVN zur Bestätigung gültiger Ausgangsdaten, das Auslöse-Signal TRGN, das Lesesignal KRDN und das FIFO-Schreibsignal WFN in ihrem zeitlichen Verlauf für vier Eingangsvariable zeigt. Die Signale AFLC sind in ihrer Bedeutung durch eine feste zeitliche Reihenfolge festgelegt, wobei das erste Signal für die Ausgangszugehörigkeitsfunktion OMF1 eines ersten Datensatzes, das zweite Signal für den scharfen Ausgangswert OUT1 des ersten Datensatzes, und ein No-Hit-Bit das dritte Signal für ein nulltes Wissensbasis-Deskriptorwort KBDX (0) eines zweiten Datensatzes, das vierte Signal für ein erstes Wissensbasis-Descriptorwort KBDX (1) des ersten Datensatzes, das fünfte bis achte Signal für scharfe Eingangswerte IN2-0 ... IN2-3 des zweiten Datensatzes, das neunte Signal für ein zweites Wissensbasis-Descriptorwort KBDX (2) des zweiten Datensatzes, die Signale zehn und elf stellvertretend für Regeln R (1) ... R (N) des zweiten Datensatzes, das zwölfte Signal für ein drittes Wissensbasis-Descriptorwort KBDX (3) des zweiten Datensatzes und ein dreizehntes Signal für eine Ausgangszugehörigkeitsfunktion OMF2 des zweiten Datensatzes der Reihe nach dargestellt sind. Diese Reihenfolge entspricht der Adreßreihenfolge des Fuzzy-Logic-Koprozessors wie er im eingangs erwähnten deutschen Patent näher beschrieben ist. Prinzipiell sind auch andere Adreßreihenfolgen möglich. Das Signal OVN zur Bestätigung eines gültigen Ausgangs weist nur eine logische Null auf während das Signal für den scharfen Ausgangswert OUT1 des ersten Datensatzes anliegt und markiert den Beginn eines neuen Zykluses Z4. Da beim obengenannten Fuzzy-Logic-Koprozessormaximal vier Eingangsvariable pro Wissensbasis vorgesehen sind und hier ein Zyklus mit vier scharfen Eingangswerten dargestellt ist, nimmt das Auslöse-Signal TRGN während des gesamten Zyklusses Z4 den Wert Logisch Null an und bewirkt, daß das Lesesignal KRDN während des Zyklusses Z4 als FIFO-Schreibsignal WFN am FIFO-Speicher anliegt und die Signale für den scharfen Ausgangswert OUT1 des ersten Datensatzes bis hin zum Signal für den scharfen Eingangswert IN2-3 in den FIFO-Speicher übernommen werden. Außerhalb des Zyklusses Z4 nimmt das FIFO-Schreibsignal WFN den Wert logisch 1 an, wodurch die restlichen Signale nicht eingeschrieben werden. Aufgrund dieser speziellen Signalfolge ist es vorteilhaft jeweils in einem Zyklus das Signal für einen scharfen Ausgangswert eines vorhergehenden ersten Datensatzes mit den Wissensbasis-Deskriptoren und scharfen Eingangswerten eines aktuellen zweiten Datensatzes in einem Zyklus zusammenzufassen.

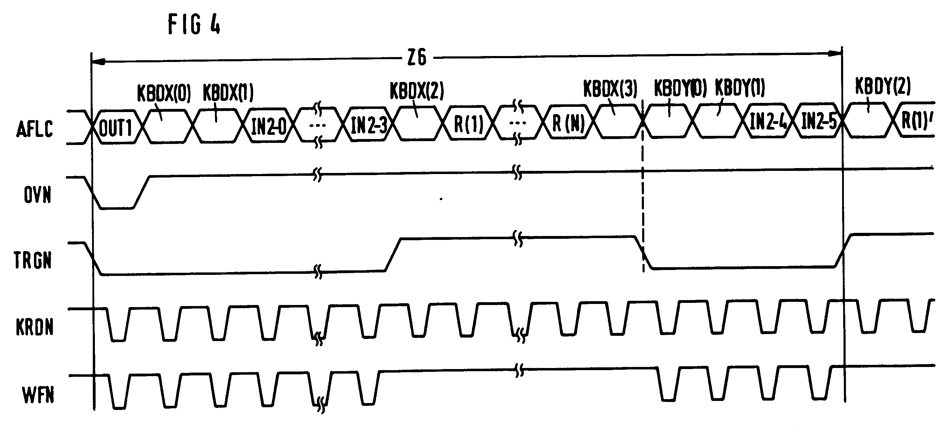

Figur 4 zeigt ein ähnliches Zeitdiagramm wie Figur 3, wobei allerdings ein Zyklus Z6 mit sechs Eingangsvariablen, die auf zwei Wissensbasen aufgeteilt sind, gezeigt ist. Bis zum Signal für das dritte Wissensbasis-Deskriptorwort KBDX (3) unterscheiden sich die dargestellten Signale nicht von den in Figur 3 dargestellten Signalen. Nach diesem Signal des Adreßbusses schließt sich bei Figur 4 anstelle des Signals für die Ausgangszugehörigkeitsfunktion OMF2 das nullte Wissensbasis-Deskriptorwort KBDY (0) einer neuen Wissensbasis an und wird gefolgt von Signalen für das erste Wissensbasis-Deskriptorwort KBDY (1) der neuen Wissensbasis, Signalen für die beiden restlichen scharfen Eingangswerte IN2-4 und IN2-5, einem Signal für das zweite Wissensbasis-Deskriptorwort KBDY (2) der neuen Wissensbasis und einem Signal für eine Regel R (1)' der neuen Wissensbasis. Der Zyklus Z6 beginnt auch hier mit dem Signal für den scharfen Ausgangswerte OUT1 und endet mit dem sechsten scharfen Eingangswert IN2-5. Das Auslöse-Signal TRGN nimmt auch in der zweiten Wissensbasis ab dem nullten Wissensbasis-Deskriptorwort KBDY(0) der neuen Wissensbasis bis hin zum letzten scharfen Eingangswert IN2-5 den Wert logisch Null an. Dies bedeutet, daß in diesem Fall die Signale für die Wissensbasis-Deskriptorworte KBDY (0) und KBDY (1) sowie für die scharfen Eingangswerte IN2-4 und IN2-5 in den FIFO-Speicher FIFO und der Ausgangswert OUT1 des vorherigen Zyklusses übernommen werden.

Zu Beginn des erfindungsgemäßen Verfahrens zum Betrieb der obengenannten Anordnung werden mit Hilfe des Rechners PC über die Schnittstelle PCS und die Protokoll-Recheneinheit PMC Daten DK2 in den Wissensbasis-Speicher KBM eingeschrieben. Diese Daten können optional auch zu Testzwecken vom Rechner PC aus dem Wissensbasis-Speicher KBM abgefragt werden und bestehen aus Wissensbasis-Deskriptorworten und Wissensbasen mit Werten für Eingangszugehörigkeitsfunktionen, Regeln und Ausgangszugehörigkeitsfunktionen.

Die Regelstrecke RS liefert einen Datensatz an den Wirts-Rechner MC und diese stellt dem Fuzzy-Logic-Koprozessor den Datensatz als scharfe Eingangswerte zur Verfügung, worauf der Fuzzy-Logic-Koprozessor die Signale AFLC des Adreßbusses erzeugt und dem Wissensbasis-Speicher KBM und einem Dateneingang des FIFO-Speichers zur Verfügung stellt. Da zu Beginn noch kein Signal für einen vorhergehenden scharfen Ausgangswert vorliegt wird als erstes Signal das Signal für das nullte Wissensbasis-Deskriptorwort KBDX (0) in den FIFO-Speicher FIFO eingeschrieben. Abhängig vom Auslöse-Signal TRGN des Fuzzy-Logic-Koprozessors werden nur die Signale für das nullte Wissensbasis-Deskriptorwort KBDX (0) und das erste Wissensbasis-Deskriptorwort KBDX (1), die Signale für die scharfen Eingangswerte IN2-0 ... IN2-3 und falls vorhanden Signale für scharfe Ausgangswerte OUT1 eingeschrieben. Da, wie beispielsweise aus Figur 4 ersichtlich, ein Zyklus mehrere Datenbasen erfassen kann muß der Beginn eines Zyklusses markiert werden. Hierzu wird bei jedem Wort des FIFO-Speichers ein Markierungsbit B16, beispielsweise das sechszehnte Bit, durch das Signal OVN zur Bestätigung eines gültigen Ausgangs markiert.

Startet der Benutzer die Emulation am Rechner PC, so wird in der Protokoll-Recheneinheit PMC ein Startprogramm durchgeführt, das den FIFO-Speicher rücksetzt, den Interupt-Eingang INTN beispielsweise auf eine fallende Flanke aktiviert, den Interrupt-Vektor auf den Beginn eines Synchronisationsprogramms zeigen läßt und Programmvariable voreinstellt.

Zeigt nun das Signal OVN zur Bestätigung gültiger Ausgangsdaten den Beginn eines neuen Zyklusses an, so wird in der Protokoll-Recheneinheit PCM ein Interrupt ausgelöst und das Synchronisationsprogramm gestartet.

Durch das Synchronisationsprogramm wird der FIFO-Speicher so lange gelesen bis das Ausgangssignal FO des FIFO-Speichers ein markiertes Signal, das heißt ein Signal für einen scharfen Ausgangswert eines vorhergehenden Datensatzes, aufweist. Ferner wird im Synchronisationsprogramm die Zeitgeberschaltung TIME rückgesetzt und der Interrupt-Vektor auf dem Beginn eines Trigger-Programms gerichtet.

Erfolgt nun ein erneuter Interrupt, aufgrund beispielsweise einer fallenden Flanke des Signals OVN zur Bestätigung gültiger Ausgangsdaten, so wird das Trigger-Programm gestartet. Durch das Trigger-Programm wird der Wert der Zeitgeberschaltung TIME sowie alle zu einem jeweiligen Zyklus gehörigen Signale aus dem FIFO-Speicher eingelesen und im Schreib/Lese-Speicher zwischengespeichert. Aus dem nullten Wissensbasis-Deskriptorwort kann hier vom Trigger-Programm festgestellt werden, ob die vom FIFO-Speicher gelesenen Daten zur aktuellen Wissensbasis gehören oder nicht. Durch das Trigger-Programm wird ein Trigger-Puffer in Form eines Ringpuffers verwaltet und vom Benutzer vorgebbare Trigger-Bedingungen für die scharfen Eingangswerte und/oder Ausgangswerte überprüft. Sind die Trigger-Bedingungen erfüllt, wird der Ringpuffer nur mit so vielen Datensätzen aufgefüllt, daß eine durch den Benutzer vorgebbare Anzahl von Datensätzen vor dem Trigger (Pre-Trigger) nicht überschrieben werden.

Als weitere Bedingung kann im Trigger-Programm eine sogenannte Trace-Bedingung vorgesehen werden, daß nur jeder x-te Datensatz aus dem Trigger-Puffer abgefragt wird und daraus scharfe Eingangs- und Ausgangswerte berechnet werden. Die scharfen Eingangs- und Ausgangswerte können beim obengenannten Fuzzy-Logic-Koprozessor aufgrund der folgenden Beziehungen berechnet werden:

Signal des Adreßbusses bei einem scharfen Eingangswert: = erstes Wissensbasis-Deskriptorwort + Nummer des Eingangs $*2^8$ + scharfer Eingangswert.

Signal des Adreßbusses bei einem scharfen Ausgangswert: = $2^{15}$ * NO-HIT-Bit + scharfer Ausgangswert.

Die Signale des Adreßbusses bei scharfen Ausgangswerten stellen hierbei nur Scheinadressen (dummy addresses) dar, da die Daten der durch die Scheinadressen adressierten Speicherzellen im Wissensbasis-Speicher KBM vom Fuzzy-Logic-Koprozessor selbst nicht genutzt werden.

Die berechneten Werte und der Wert der Zeitgeberschaltung wird im Trace-Puffer abgespeichert und dabei die Adresse des Trace-Puffers erhöht.

Bevor der Trigger-Puffer überläuft, wird das Trigger-Programm abgebrochen und das Kommando an das Protokollhandhabungsprogramm übergeben. Die Datensätze im Trace-Puffer werden dann über die Schnittstelle PCS unter weniger zeitkritischen Bedingungen an den Rechner PC gesandt und dort vorteilhafterweise graphisch aufbereitet.

Das Trigger-Programm muß in einer Zeit abarbeitbar sein, die sich aus der Summe eines Schreibzugriffs und eines Lesezugriffs der Wirts-Recheneinheit auf den Fuzzy-Logic-Koprozessor und aus der Verarbeitungszeit im Fuzzy-Logic-Koprozessor für einen Datensatz ergibt, damit der FIFO-Speicher nicht überläuft.

Da die Protokoll-Recheneinheit PMC zwangsläufig asynchron zum Fuzzy-Logic-Koprozessor arbeitet ist die Synchronisationsschaltung SYNC erforderlich. Hierbei wird das Rücksetzsignal RESPMC lediglich durch den Inverter 1 zum FIFO-Rücksetzsignal RESFN. Das synchronisierte FIFO-Schreibsignal WFN ist nur dann aktiv (low), wenn das Lesesignal KRDN und das Auslöse-Signal TRGN sowie das negierte Ausgangssignal QN des RS-Flip-Flops gleich Null sind. Da das Rücksetzsignal RSPMC dem Rücksetzeingang R des RS-Flip-Flops FF zugeführt wird, ist der negierte Ausgang QN high und damit das FIFO-Schreibsignal WFN inaktiv während des Rücksetzens. Nach dem Rücksetzen kann das RS-Flip-Flop durch ein inaktives Auslöse-Signal gesetzt werden, wodurch der negierte Ausgang QN zwar Null wird aber das FIFO-Schreibsignal WFN durch das inaktive Auslöse-Signal weiterhin inaktiv bleibt. Wenn jetzt das Auslöse-Signal aktiv wird, also eine fallende Flanke beim Auslöse-Signal auftritt, wird das FIFO-Schreibsignal WFN aktiv und entspricht dem Lesesignal KRDN. Anders ausgedrückt das Einschreiben von Signalen in den FIFO-Speicher darf nach einem Rücksetzimpuls der Protokoll-Recheneinheit erst dann fortgesetzt werden, wenn das Auslöse-Signal TRGN erneut aktiv wird.

Damit die Protokoll-Recheneinheit PMC nicht die Wissensbasen ändert, die gleichzeitig vom Koprozessor gelesen werden und damit der Koprozessor unter Umständen auf inkonsistente Daten zugreifen würde, wird im Wissensbasisspeicher KBM der Bereich RB mit beispielsweise 6 * 256 Worten reserviert und zunächst nicht mit Daten belegt. Die Veränderung von Informationen im Wissensbasisspeicher läuft dann in zwei Schritten:

Im ersten Schritt schreibt die Protokoll-Recheneinheit die geänderten Daten in den reservierten Bereich RB. Dieser Vorgang ist nicht zeitkritisch, weil der Fuzzy-Logic-Koprozessor auf diesen Bereich nie zugreift.

Im zweiten Schritt werden die Wissensbasis-Deskriptoren auf diesen Bereich ausgerichtet. Letztere Veränderung muß zu einem Zeitpunkt erfolgen, zu dem der Koprozessor nicht auf den Wissensbasisspeicher KBM zugreift. Dies ist der Fall, wenn das Signal OVN auf logisch Null geht, das heißt der Fuzzy-Logic-Koprozessor einen scharfen Ausgangswert berechnet hat und darauf wartet, daß die Wirts-Recheneinheit MC diesen Wert liest. Das Schreiben der Wissensbasis-Deskriptoren ist zeitkritisch und muß in der Regel mit einem direkten Speicherzugriff DMA geschehen. Der direkte Speicherzugriff wird durch beispielsweise die fallende Flanke des Signals OVN gesteuert und muß schneller erfolgen, als der erneute Zugriff des Fuzzy-Logic-Koprozessorsauf das erste Wissensbasis-Deskriptorwort. Diese Zeitspanne ist bestimmt durch zwei Zugriffe der Wirts-Recheneinheit, nämlich durch das Lesen der scharfen Ausgangswerte und den Start eines neuen Rechenzyklusses durch Schreiben des Steuer-Registers im Fuzzy-Logic-Koprozessor. Dieser Zugriff ist bei hinreichend schnellem direkten Speicherzugriff DMA wesentlich langsamer als die obengenannte Zeitspanne, deshalb können mit diesem Vorgehen inkonsistente Datenbasen vermieden werden.

Eine weitere Möglichkeit zur Vermeidung von inkonsistenten Daten im Wissensbasisspeicher KBM besteht darin, zwei identische Speicherblöcke B1 und B2 für den Wissensbasisspeicher KBM vorzusehen und nach dem Ändern der Daten in einem Block nur die Blöcke umzuschalten (bank switching). Dies hat den Vorteil, daß der gesamte Adreßumfang des Wissensbasisspeichers von der Protokoll-Recheneinheit beschrieben und vom Fuzzy-Logic-Koprozessor gelesen werden kann. Ein Nachteil hierbei besteht jedoch darin, daß beim Wissensbasisspeicher ein doppelter Speicheraufwand erforderlich ist.

**Patentansprüche**

1. Anordnung zur Emulation eines Fuzzy-Logic-Koprozessors (FLC),
   - bei der neben einer Wirts-Recheneinheit (MC) und dem Fuzzy-Logic-Koprozessor, ein Wissensbasis-Speicher (KBM) in Form eines Dual-Ported-RAMs, ein FIFO-Speicher (FIFO), eine Synchronisationsschaltung (SYNC) und eine Protokoll-Recheneinheit (PMC) vorgesehen sind,
   - bei der die Protokoll-Recheneinheit mit einer Zeitgeberschaltung (TIME), einem Schreib/Lese-Speicher (RAM), einem Lese-Speicher (ROM) mit einem Programm für die Protokoll-Recheneinheit direkt und mit einem Rechner (PC) über eine Schnittstelle (PCS) verbunden ist, wobei der Rechner eine Benutzerschnittstelle zur Bedienung der Anordnung zur Verfügung stellt,
   - bei dem vom Fuzzy-Logic-Koprozessor kommende Signale eines Adreßbusses (AFLC) den Wissensbasis-Speicher adressieren und in den FIFO-Speicher einschreibbar sind,
   - bei der ein Signal (OVN) zur Meldung gültiger Ausgangsdaten als Interrupt-Signal (INTN) für die Protokoll-Recheneinheit dient und in einem zu einem jeweiligen Signal des Adreßbusses des Fuzzy-Logic-Koprozessors gehörigen Markierungsbit (B16) im FIFO-Speicher speicherbar ist,
   - bei der Daten (DK1) der vom Fuzzy-Logic-Koprozessor adressierten Speicherzellen des Wissensbasis-Speichers vom Fuzzy-Logic-Koprozessor lesbar und Daten (DK2) direkt von der Protokoll-Recheneinheit in den Wissensbasisspeicher einschreibbar sind,
   - bei der Ausgangssignale (FO) des FIFO-Speichers von der Protokoll-Recheneinheit einlesbar sind und
   - bei der in der Synchronisationsschaltung (SYNC) aus einem Lesesignal (KRDN) des Fuzzy-Logic-Koprozessors, einem Auslösesignal (TRGN) des Fuzzy-Logic-Koprozessors und einem Rücksetzsignal (RESPMC) der Protokoll-Recheneinheit ein FIFO-Rücksetzsignal (RESFN) und ein synchronisiertes FIFO-Schreibsignal (WFN) bildbar und dem FIFO-Speicher als Steuersignale zuführbar sind.

2. Anordnung nach Anspruch 1,
   bei der die Wirts-Recheneinheit und der Fuzzy-Logic-Koprozessor auf einem gemeinsamen Halbleiterchip integriert sind und bei der eine Schnittstelle (SI) zwischen der Wirts-Recheneinheit und dem Fuzzy-Logic-Kontroller extern nicht zugänglich ist.

3.  Anordnung nach Anspruch 1,
    - bei der die Synchronisationsschaltung (SYNC) ein RS-Flip-Flop (FF), eine UND-Verknüpfung (2), eine ODER-Verknüpfung (3) und einen Inverter (1) enthält,
    - bei der das Rücksetzsignal (RESPMC) der Protokoll-Recheneinheit mit dem Eingang des Inverters und dem Rücksetzeingang (R) des RS-Flip-Flops verbunden ist und am Ausgang des Inverters das FIFO-Rücksetzsignal (RESFN) bildbar und einem ersten Eingang der UND-Verknüpfung zuführbar ist,
    - bei dem das Auslöse-Signal (TRGN) einem zweiten Eingang der UND-Verknüpfung zuführbar ist, deren Ausgang mit einem Setzeingang (S) des RS-Flip-Flops verbunden ist, und
    - bei dem die ODER-Verknüpfung das Lesesignal (KRDN), das Auslösesignal (TRGN) und ein Signal des negierten Flip-Flop-Ausgangs (QN) zum synchroni-sierten FIFO-Schreibsignal (WFN) ver-knüpft.

4.  Anordnung nach einem der Ansprüche 1 bis 3, bei der auch Daten (DK2) aus dem Wissensbasisspeicher von der Protokoll-Recheneinheit lesbar sind.

5.  Anordnung nach einem der Ansprüche 1 bis 4,
    - bei der durch die Protokoll-Recheneinheit Daten (DK2) nur in einen reservierten Bereich (RB) des Wissensbasis-Speichers einschreibbar sind, während der Wissensbasis-Speicher so adressierbar ist, daß nur Daten (DK1) außerhalb des reservierten Bereiches im Wissensbasis-Sspeicher vom Fuzzy-Logic-Koprozessor lesbar sind und
    - bei der nach einer Änderung der Daten im Wissensbasis-Speicher mit Hilfe eines direkten Speicherzugriffs (DMA) Adreß-zeiger des Deskriptorteils einer Wissens-basis schnell vom Schreib/Lese-Speicher (RAM) in den Wissensbasis-Speicher übertragbar sind.

6.  Anordnung nach einem der Ansprüche 1 bis 4,
    - bei der der Wissensbasisspeicher aus zwei Blöcken (B1, B2) mit jeweils vollem Adreßumfang besteht,
    - bei der ein erster Block nur vom Fuzzy-Logic-Koprozessor gelesen, der zweite Block nur durch die Protokoll-Recheneinheit geschrieben wird, und
    - bei der nach dem Ändern von Daten im Wissensbasis-Speicher nur der Zugriff auf die Blöcke vertauscht wird.

7.  Anordnung nach einem der Ansprüche 1 bis 5, bei der die Benutzerschnittstelle des Rechners (PC) Mittel zur graphischen Anzeige der von der Protokoll-Recheneinheit gelieferten Werte aufweist.

8.  Verfahren zum Betrieb einer Anordnung nach Anspruch 1,
    - bei dem mit Hilfe des Rechners (PC) vom Benutzer gewünschte Werte für Wissensbasis-Deskriptoren und Wissens-basen mit Eingangszugehörigkeitsfunk-tionen, Regeln und Ausgangszugehörig-keitsfunktionen über die Schnittstelle (PCS) und die Protokoll-Recheneinheit (PMC) in den Wissensbasisspeicher (KBM) eingeschrieben werden und eine Emulation gestartet wird,
    - bei dem der FIFO-Speicher abhängig vom Rücksetzsignal (RESPMC) der Protokoll-Recheneinheit rückgesetzt wird,
    - bei dem abhängig vom Auslöse-Signal (TRGN) des Fuzzy-Logic-Koprozessors nur ein Teil (OUT1, ... , IN2-3) der vom Fuzzy-Logic-Koprozessor erzeugten Adressen ausgewählt und in den FIFO-Speicher eingeschrieben werden,
    - bei dem scharfe Ausgangswerte (OUT1) durch das Signal (OVN) zur Meldung gültiger Ausgangswerte markiert werden, wobei scharfe Ausgangswerte auf dem Adreßbus nur Scheinadressen darstellen und die Daten der durch die Scheinadressen adressierten Speicherzellen vom Fuzzy-Logic-Koprozessor nicht genutzt werden,
    - bei dem die Protokoll-Recheneinheit auf dem Beginn eines neuen Zyklusses synchronisiert wird und anschließend die Zeitgeberschaltung zurückgesetzt wird, wobei die Protokoll-Recheneinheit dadurch synchronisiert wird, daß der FIFO-Speicher von der Protokoll-Recheneinheit solange gelesen wird, bis eine als Aus-gangswert (OUT1) markierte Adresse ge-lesen wird,
    - bei dem die ausgewählten Adressen eines Zyklusses von der Protokoll-Recheneinheit gelesen werden und, aufgrund einer festen Reihenfolge, Signale für Wis-

7

sensbasis-Deskriptorworte (KBDX (0)), KBDX (1)), scharfe Eingangswerte und scharfe Ausgangswerte als solche erkannt werden,

- bei dem aus den Signalen für die Wissensbasis-Deskriptorworte und aus den Signalen für die scharfen Eingangs- und Ausgangswerte eine gerade aktuelle Wissensbasis und die jeweiligen scharfen Eingangs- und Ausgangswerte berechnet werden,

- bei dem mindestens ein Teil der scharfen Eingangs- und Ausgangswerte zusammen mit den jeweiligen Zeitwerten des Zeitgebers im Schreib/Lese-Speicher zwischengespeichert werden und

- bei dem die zwischengespeicherten scharfen Eingangs- und Ausgangswerte zusammen mit den jeweiligen Zeitwerten des Zeitgebers an den Rechner übergeben werden und dort für den Benutzer sichtbar gemacht werden.

9. Verfahren nach Anspruch 8,
   - bei dem mindestens ein Teil des Schreib/Lese-Speichers mit Hilfe der Protokoll-Recheneinheit als Ring-Puffer betrieben wird und
   - bei dem vom Benutzer Trigger-Bedingungen für die scharfen Eingangs- und/oder Ausgangswerte vorgegeben werden und aufgrund des Ring-Puffers eine vom Benutzer vorgebbare Anzahl von scharfen Eingangs- und Ausgangswerten vor Erfüllung der Trigger-Bedingungen gespeichert und für den Benutzer sichtbar gemacht werden (Pre-Trigger).

10. Verfahren nach Anspruch 8,
    bei dem durch den Benutzer vorgegeben wird, daß nur jeder x-te Datensatz im Schreib/Lese-Speicher gespeichert und für den Benutzer sichtbar gemacht wird.

FIG 1

FIG 2

FIG 3

FIG 4

EP 0 612 010 A2